(19) Europäisches Patentamt
European Patent Office
Office européen des brevets

(11) **EP 4 787 926 A1**

(12) **EUROPEAN PATENT APPLICATION**
published in accordance with Art. 153(4) EPC

(43) Date of publication:
**05.08.2026 Bulletin 2026/32**

(21) Application number: **23953933.1**

(22) Date of filing: **01.11.2023**

(51) International Patent Classification (IPC):
**H04W 24/02** (2009.01)

(52) Cooperative Patent Classification (CPC):
**H04W 24/02**

(86) International application number:
**PCT/CN2023/129183**

(87) International publication number:
**WO 2025/065798 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2023 PCT/CN2023/122924**

(71) Applicant: **1FINITY INC.**
**Kawasaki-shi, Kanagawa 211-8588 (JP)**

(72) Inventors:
• **YI, Su**
  **Beijing 100022 (CN)**
• **LI, Guorong**
  **Beijing 100022 (CN)**
• **HAN, Chao**
  **Beijing 100022 (CN)**

(74) Representative: **Haseltine Lake Kempner LLP**
**Cheapside House**
**138 Cheapside**
**London EC2V 6BJ (GB)**

(54) **METHOD AND APPARATUS FOR CONFIGURING DISCONTINUOUS RECEPTION CYCLE**

(57) Embodiments of the present disclosure provide a method and an apparatus for configuring a discontinuous reception (DRX) cycle, the method comprising: transmitting a first configuration message by a network device to a terminal equipment, the first configuration message configuring a non-integer DRX cycle represented by one or more fractions; and the first configuration message includes a first information element, the first information element including a field indicating a non-integer long DRX cycle and a start offset thereof and/or indicating a non-integer short DRX cycle. According to the embodiments of the present disclosure, by performing DRX-related enhancements at an RRC and/or MAC layer, problems of arrival cycles of different XR service flows as well as DRX configuration and operation in the case of multi-XR service flows are solved, so as to better support UE power saving for XR services and media services.

310

a network device transmits a first configuration message to a terminal equipment, the first configuration message configuring a non-integer DRX cycle represented by one or more fractions; the first configuration message includes a first information element, the first information element including a field indicating a non-integer long DRX cycle and a start offset thereof and/or indicating a non-integer short DRX cycle

## FIG. 3

# EP 4 787 926 A1

**Description**

TECHNICAL FIELD

The present disclosure relates to the field of communications.

BACKGROUND

In 3rd Generation Partnership Project (3GPP) services and networks, eXtended Reality (XR) service is supported, the XR service referring to all real and virtual combined environments and human-computer interactions generated by computer technologies and wearable devices. Its application fields include but are not limited to entertainment, healthcare, education, etc. The XR service may include representative forms such as Virtual Reality (VR) service, Augmented Reality (AR) service, and Mixed Reality (MR) service, as well as hybrid and crossover fields.

Virtual reality is a rendered version of an issued visual and audio scenario. When an observer or user moves within limits defined by an application program, rendering aims to simulate visual and auditory sensory stimuli in a real world as naturally as possible. Augmented reality refers to providing a user with additional information or artificially generated items, or content overlaid on a current environment thereof. Mixed reality is an advanced form of AR, in which some virtual elements are inserted into a physical scenario, with a purpose of providing an illusion that makes persons feel these elements are a part of a real scenario.

A PDU Set consists of one or more Protocol Data Units (PDUs), these PUDs carrying a payload of one information element generated at an application layer, such as a frame or video slice for XR and media services. In some implementations, an application layer requires all PDUs in a PDU Set to use corresponding information elements. In other implementations, when some PDUs are lost, an application layer may still recover all or part of information elements.

It should be noted that the above introduction to the technical background is just to facilitate a clear and complete description of technical solutions of the present disclosure, and is elaborated to facilitate understanding of persons skilled in the art. It cannot be considered that the technical solutions are known by persons skilled in the art just because these solutions are elaborated in Background of the present disclosure.

SUMMARY

Inventors find that in order to reduce power consumption of a terminal equipment, 3GPP has been using Discontinuous Reception (DRX) technology since the 3G era. When a terminal equipment is configured with DRX, the terminal equipment does not need to continuously monitor a Physical Downlink Control Channel (PDCCH), thereby achieving a purpose of energy saving.

In order to reduce power consumption when a terminal equipment uses XR service, a DRX cycle may be matched with a data arrival interval, and an On Duration may be roughly aligned with a data arrival time. In this way, when data arrives, a UE may monitor a PDCCH transmitted by a base station to obtain scheduling information therefrom and schedule data timely. However, currently a DRX cycle is defined as different integer values in milliseconds. If a data arrival interval is a non-integer, this will cause a mismatch between the data arrival interval and a DRX cycle. After a period of time, a situation where a data arrival time falls within a sleep period may occur. As a result, a UE will not be able to monitor a PDCCH, which will affect timely scheduling of data and increase data transmission latency.

For at least one of the above problems or other similar problems, embodiments of the present disclosure provide a method and an apparatus for configuring a discontinuous reception (DRX) cycle.

According to an aspect of embodiments of the present disclosure, an apparatus for configuring a DRX cycle is provided, applicable to a network device, the apparatus including:
a transmitting unit configured to transmit a first configuration message to a terminal equipment, the first configuration message configuring a non-integer DRX cycle represented by one or more fractions; the first configuration message includes a first information element, the first information element including a field indicating a non-integer long DRX cycle and a start offset thereof and/or indicating a non-integer short DRX cycle.

According to another aspect of embodiments of the present disclosure, an apparatus for configuring a DRX cycle is provided, applicable to a network device, the apparatus including:
a transmitting unit configured to transmit a second configuration message to a terminal equipment, the second configuration message configuring disable CG retransmission monitoring for a configured grant; the second configuration message includes a second information element, the second information element including a sixth field, the sixth field indicating disable CG retransmission monitoring for a configured grant.

One of advantageous effects of the embodiments of the present disclosure is that: according to the embodiments of the present disclosure, by performing DRX-related enhancements at an RRC and/or MAC layer, problems of different arrival intervals of XR service flows as well as DRX configuration and operation in the case of multi-XR service flows are solved, so as to better support UE power saving for XR services and media services.

Referring to later descriptions and drawings, specific implementations of the present disclosure are disclosed in detail, indicating a mode in which a principle of the present disclosure may be adopted. It should be understood that implementations of the present disclosure are not limited in terms of a scope. Within a scope of a spirit and terms of the attached claims, implementations of the present disclosure include many changes, modifications and equivalents.

Features that are described and/or illustrated for one implementation may be used in the same way or in a similar way in one or more other implementations, be combined with features in other implementations or replace features in other implementations.

It should be emphasized that the term "include/contain" when being used herein refers to presence of a feature, a whole piece, a step, or a component, but does not exclude presence or addition of one or more other features, whole pieces, steps, or components.

BRIEF DESCRIPTION OF DRAWINGS

An element and a feature described in one drawing or one implementation of the embodiments of the present disclosure may be combined with an element and a feature shown in one or more other drawings or implementations. In addition, in the drawings, similar labels denote corresponding components in several drawings and may be used to indicate corresponding components used in more than one implementation.

Included drawings are used to provide further understanding on the embodiments of the present disclosure, constitute a part of the Specification, are used to illustrate implementations of the present disclosure, and expound a principle of the present disclosure together with text descriptions. Obviously, the drawings in the following descriptions are only some embodiments of the present disclosure. Persons skilled in the art may further obtain other drawings according to these drawings under the premise that persons skilled in the art do not pay inventive labor. In the drawings:

FIG. 1 is a schematic diagram of a DRX cycle;
FIG. 2 is a schematic diagram of mismatch between a DRX cycle and an XR traffic interval;
FIG. 3 is a schematic diagram of a method for configuring a DRX cycle in embodiments of the present disclosure;
FIG. 4 is a schematic diagram of an example of a DRX configuration;
FIG. 5 is a schematic diagram of misalignment between continuous monitoring times of a long DRX cycle and a short DRX cycle;
FIG. 6 is a schematic diagram of a method for determining a DRX cycle in embodiments of the present disclosure;
FIG. 7 is another schematic diagram of a method for configuring a DRX in embodiments of the present disclosure;
FIG. 8 is another schematic diagram of a method for implementing a DRX configuration in embodiments of the present disclosure;
FIG. 9 is a schematic diagram of an apparatus for configuring a DRX cycle in embodiments of the present disclosure;
FIG. 10 is another schematic diagram of an apparatus for configuring a DRX in embodiments of the present disclosure;
FIG. 11 is a schematic diagram of an apparatus for determining a DRX cycle in embodiments of the present disclosure;
FIG. 12 is another schematic diagram of an apparatus for implementing a DRX configuration in embodiments of the present disclosure;
FIG. 13 is a schematic diagram of a network device in embodiments of the present disclosure;
FIG. 14 is a schematic diagram of a terminal equipment in embodiments of the present disclosure.

DETAILED DESCRIPTION

Referring to the drawings, through the following Specification, the aforementioned and other features in the present disclosure will become obvious. The Specification and the drawings specifically disclose specific implementations of the present disclosure, indicating partial implementations for which a principle of the present disclosure may be adopted. It should be understood that the present disclosure is not limited to described implementations, on the contrary, the present disclosure includes all modifications, variations and equivalents falling within the scope of the attached claims.

In embodiments of the present disclosure, the terms "first" and "second", etc. are used to distinguish different elements in terms of appellation, but do not represent a spatial arrangement or time sequence, etc. of these elements, and these elements should not be limited by these terms. The term "and/or" includes any one of and all combinations of one or more of listed associated terms. The terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, the singular forms "a/an" and "the", etc. include plural forms, and should be understood broadly as "a kind of" or "a type of", but are not defined as the meaning of "one", in addition, the term "the" should be understood to include both singular forms and plural forms, unless the context clearly indicates otherwise.

In addition, the term "according to" should be understood as "at least partially according to......", and the term "based on" should be understood as "at least partially based on......", unless the context clearly indicates otherwise.

In embodiments of the present disclosure, the term "communication network" or "radio communication network" may refer to a network meeting any of the following communication standards, such as Long Term Evolution (LTE), LTE-Advanced (LTE-A), Wideband Code Division Multiple Access (WCDMA), High-Speed Packet Access (HSPA) and so on.

And, communication between devices in a communication system may be performed according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In embodiments of the present disclosure, the term "network device" e.g. refers to a device accessing a terminal equipment to a communication network in a communication system and providing services to the terminal equipment. Network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

A base station may include but be not limited to: a node B (NodeB or NB), an evolution node B (eNodeB or eNB) and a 5G base station (gNB), etc., and moreover, may further include a Remote Radio Head (RRH), a Remote Radio Unit (RRU), a relay or low power node (such as femto, pico, etc.). And the term " base station " may include some or all functions thereof, each base station may provide communication coverage to a specific geographic region. The term "cell" may refer to a base station and/or a coverage area thereof, which depends on a context in which this term is used.

In embodiments of the present disclosure, the term "User Equipment (UE)" e.g. refers to a device accessing a communication network and receiving network services via a network device, or may also be called "Terminal Equipment (TE)". The terminal equipment may be fixed or mobile, and may also be called a Mobile Station (MS), a terminal, a user, a Subscriber Station (SS), an Access Terminal (AT), a station and so on.

A terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera, or may be an IAB-MT, and so on.

For another example, under a scenario such as Internet of Things (IoT), a TE may further be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Currently, 5G technology is studying key issues, solutions and conclusions for supporting advanced media services, such as High Data Rate Low Latency (HDRLL) service, AR/VR/XR services and tactile/multimodal communication services. Goals include:

1. Supporting an enhanced function of a multi-mode service, including:

- studying whether and how to enable an application program to provide users with relevant tactile and multi-mode data (such as audio, video and tactile data related to a specific time) at similar times, with a focus on a demand for enhanced policy control (such as QoS policy coordination).

2. Enhancing network exposure to support interaction between 5GS (a 5G system) and an application program, including:

- studying whether and how to perform application synchronization and Quality of Service (QoS) policy coordination among multiple UEs or multiple QoS flows of each UE, and how to interact between AF and 5GS.
- studying exposure of 5GS QoS information (such as QoS capabilities) and network conditions to an application program so as to achieve fast codec/rate adaptation, which helps to provide required QoE (for example, helping to alleviate 5GS congestion).

3. Studying whether and how to perform the following QoS and policy enhancements for XR services and media service transmission, including:

- studying flow characteristics of media services that are able to improve a network resource utilization rate and Quality of Experience (QoE).
- enhancing a QoS framework to support PDU Set granularity (such as a video/audio frame/tile, an application data unit, control information), wherein a PDU Set consists of PDUs with the same QoS requirements.
- supporting differentiated QoS processing considering different importances of PDU Sets. For example, a packet belonging to a less important PDU Set is legally discarded to reduce resource waste.

- whether and how to support uplink-downlink transmission coordination to meet a Round Trip Time (RTT) delay requirement from a UE to N6 termination points of a User Plane Function (UPF).
- potential policy enhancing to reduce jitter to the greatest extent, with a focus on demand supply from an Application Function (AF) and expansion of a policy and charging control (PCC) rule.

In order to reduce power consumption of UE, 3GPP has been using a DRX technology since the 3G era. Full name of DRX is Discontinuous Reception, and DRX mechanisms in RRC IDLE and RRC CONNECTED states are different. DRX mechanism in an idle state is a paging mechanism, i.e., a network side wakes up a UE by issuing a paging message. In embodiments of the present disclosure, DRX in a connected state (Connected DRX, C-DRX) is taken as an example for description. In the following description, unless otherwise specified, DRX refers to DRX used when a UE is in a connected state, i.e., C-DRX.

When a UE is configured with DRX, the UE does not need to continuously monitor a Physical Downlink Control Channel (PDCCH), thereby achieving a purpose of energy saving. An MAC entity of a UE may be configured with a DRX function by RRC signaling to control monitoring activities of a UE on PDCCH of certain Radio Network Temporary Identifiers (RNTIs) related to the MAC entity.

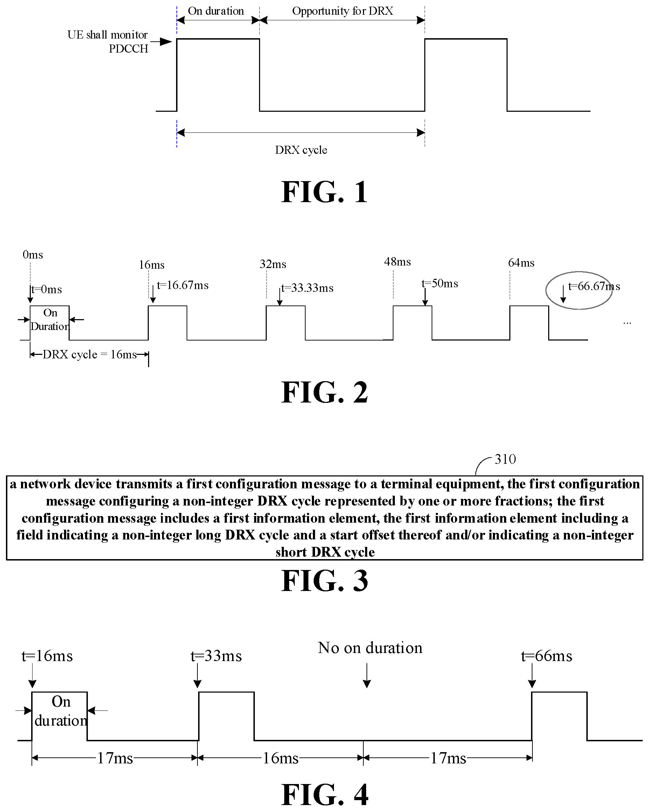

Basic mechanism of DRX is to configure a DRX cycle for a UE in an RRC CONNECTED state. A DRX cycle consists of an On Duration and an Opportunity for DRX. Within an "On Duration" time, a UE monitors and receives a PDCCH, and within an "Opportunity for DRX" (sleep) time, a UE does not receive a PDCCH to reduce power consumption. A DRX cycle specifies periodic repetition of an On Duration followed by a possible period of inactivity, as shown in FIG. 1.

To give consideration to both power saving and latency, according to a length of time during which a UE monitors a specific scheduling channel after waking up, NR supports two types of DRX cycles: a long DRX cycle and a short DRX cycle. If it is predicted that UE data arrives frequently or a service is sensitive to latency, a network side may configure a UE to use a short DRX cycle, and if it is predicted that UE data is relatively sparse and not sensitive to latency, a network side may configure a UE to only use a long DRX cycle. To facilitate a UE to perform switching between long and short DRX cycles, a long DRX cycle is required to be an integer multiple of a short DRX cycle, which ensures that continuous monitoring times (onDuration) of the two are aligned.

Inventors find that there are many types of frame rates for existing XR services, and most of frame rates correspond to non-integer data arrival intervals. If taking millisecond as a unit, an arrival interval of XR service flow (called an XR traffic interval or data transmission interval for short, etc.) may be a non-integer (a rational number). For example, XR services with frame rates of 15, 30, 45, 60, 72, 90 and 120 frames per second correspond to data intervals that are non-integers respectively (respectively being 66.66, 33.33, 22.22, 16.66, 13.88, 11.11 and 8.33 milliseconds).

Current DRX cycles are defined as different integer values in milliseconds. In order to reduce power consumption when a UE uses XR service, a DRX cycle may be matched with a data (such as XR service flow) arrival interval, and an On Duration may be roughly aligned with a data arrival time. In this way, when data arrives, a UE may monitor a PDCCH transmitted by a base station to obtain scheduling information therefrom and schedule data timely. If a data arrival interval is a non-integer, this will cause a mismatch between the data arrival interval and a DRX cycle. After a period of time, a situation where a data arrival time falls within a sleep period may occur. As a result, a UE will not be able to monitor a PDCCH, which will affect timely scheduling of data and increase data transmission latency.

FIG. 2 takes a frame rate of 60 frames per second (corresponding to a data arrival interval of approximately 16.67 milliseconds) as an example, and if a DRX cycle is set to 16 milliseconds, after several DRX cycles, it will lead to a problem that a DRX On Duration and a data arrival time (at 66.67ms in FIG. 2) are misaligned.

In case of considering characteristics of an arrival interval of XR service flow, how to solve a problem of mismatch between a DRX cycle and an arrival interval of XR service flow requires further standardization and technical implementation.

Various implementations of the present disclosure are described below with reference to the drawings. These implementations are only exemplary and are not limitations on the present disclosure. In the following description, "if...", "in a case where..." and "when...", etc. have the same meaning, and may be interchangeable.

Embodiments of a First Aspect

Embodiments of the present disclosure provide a method for configuring a DRX cycle, which is described from a network device side. FIG. 3 is a schematic diagram of a method for configuring a DRX cycle in embodiments of the present disclosure. As shown in FIG. 3, the method includes:

310: a network device transmits a first configuration message to a terminal equipment, the first configuration message configuring a non-integer DRX cycle represented by one or more fractions; the first configuration message includes a first information element, the first information element including a field indicating a non-integer long DRX cycle and a start offset thereof and/or indicating a non-integer short DRX cycle.

It is worth noting that the above FIG. 3 only schematically describes the embodiments of the present disclosure, however the present disclosure is not limited thereto. For example, some other operations may further be increased or certain operations therein may be reduced. Persons skilled in the art may make appropriate modifications according to the above contents, not being limited to records in the above FIG. 3.

According to the above embodiments, a problem that a DRX cycle does not support non-integer data arrival intervals is solved, thereby achieving UE energy saving.

In some embodiments, the first configuration message is an RRCReconfiguration message, and a first information element is an IE DRX-Config. According to the above embodiments, by enhancing an RRC configuration, RRC is able to configure a DRX cycle to be a rational number (i.e., a fraction), a problem that a DRX cycle does not support non-integer data arrival intervals is solved.

In the above embodiments, by taking performing enhancement for an IE DRX-Config in an RRCReconfiguration message and adding a configuration supporting a DRX cycle to be a rational number as an example, however the present disclosure is not limited thereto. Other information elements in other configuration messages may further be enhanced, or a new IE may be added in an RRCReconfiguration message or other configuration messages to perform the configuration.

For ease of description, by taking performing enhancement for an IE DRX-Config in an RRCReconfiguration message as an example below.

In some embodiments, the non-integer long DRX cycle and the start offset are defined uniformly.

In the above embodiments, a first information element includes a first field, the first field including a combination of a non-integer (fractional) long DRX cycle corresponding to a frame rate and a corresponding start offset thereof, for example which may be called drx-NonIntegerLongCycleStartOffset, the present disclosure is not limited thereto, and the first field may also have other names.

In the above embodiments, the first field e.g., is a CHOICE structure, each element in the CHOICE structure is a predefined combination of a non-integer long DRX cycle corresponding to a certain frame rate, and a corresponding start offset in milliseconds thereof. A first field is a CHOICE structure, indicating that when configuring, a selection is made from a non-integer long DRX cycle corresponding to a certain frame rate, and a corresponding start offset in milliseconds thereof, which are predefined.

In the above embodiments, a non-integer long DRX cycle may be represented as a fraction in milliseconds, the fraction being represented by an integer numerator and an integer denominator, such as 200/3 ms. Moreover, a value range of a start offset corresponding to each non-integer long DRX cycle is from 0 to a value obtained by rounding down the non-integer long DRX cycle, such as 0 to 66.

The following is an example of a first field:

```
drx-NonIntegerLongCycleStartOffset          CHOICE {

        ms200/3                      INTEGER(0..66),

        ms100/3                      INTEGER(0..33),
```

| | |
|---|---|
| ms200/9 | INTEGER(0..22), |
| ms50/3 | INTEGER(0..16), |
| ms125/9 | INTEGER(0..13), |
| ms100/9 | INTEGER(0..11), |
| ms25/3 | INTEGER(0..8), |
| }, | |

In the above example, a first field drx-NonIntegerLongCycleStartOffset inlcudes a fractional value drx-Non-IntegerLongCycle (non-integer long DRX cycle) in milliseconds, and drx-StartOffset (start offset) in milliseconds. Value "ms200/3" corresponds to 200/3 milliseconds, i.e., a frame rate is 15 frames per second (1000ms/15fps = 200/3ms), and similarly with other fractional values. In addition, in the above example, "ms200/3" is just a method of representing a fraction using two integers (numerator and denominator, usually being coprime integers), the present disclosure does not impose limitations thereto, "ms200/3" may further be represented as "ms200by3", "ms200over3" etc. Non-integer long DRX cycles defined in the above example correspond to frame rates of 15fps, 30fps, 45fps, 60fps, 72fps, 90fps, and 120fps, respectively.

In the above embodiments, if a first field is configured, a terminal equipment may ignore configuration of drx-LongCycleStartOffset (i.e., an integer long DRX cycle and a corresponding start offset). Thus, ambiguity in a terminal behavior is avoided.

In the above embodiments, a first information element may further include a second field, the second field including a non-integer short DRX cycle corresponding to a frame rate.

In the above embodiments, for a non-integer short DRX cycle, a new second field may be defined in an IE DRX-Config, the second field being a non-integer (fractional) short DRX cycle corresponding to a certain frame rate. The second field may be called, for example, drx-NonIntegerShortCycle, the disclosure is not limited thereto, the second field may further have other names.

In the above embodiments, the second field may be of an enumerated type, and when using, a selection is made from short DRX cycles in milliseconds and represented as fractions, which are pre-defined.

The following is an example of a second field:

| | |
|---|---|
| drx-NonIntegerShortCycle | ENUMERATED   { |
| | ms200/3,  ms100/3,  ms200/9,  ms50/3,  ms125/9,  ms100/9, |
| ms25/3, spare9, spare8, spare7, spare6, spare5, spare4, spare3, spare2, spare1 }, | |

In the above example, value "ms200/3" in a second field corresponds to 200/3 milliseconds, and so on.

In the above embodiments, if a second field is configured, a terminal equipment may ignore configuration of drx-ShortCycle (i.e., an integer short DRX cycle). Thus, ambiguity in a terminal behavior is avoided.

In the above embodiments, if a second field is configured, a value of a non-integer long DRX cycle in a first field must be multiple of a value of the second field. For example, if a second field is configured as ms100/3, a non-integer long DRX cycle in a first field may be configured as ms200/3. Thus, alignment of continuous monitoring times (onDuration) of the two may be ensured.

In some other embodiments, a non-integer long DRX cycle and a start offset are defined respectively.

In the above embodiments, a first information element includes a third field and a fourth field, for example, new third and fourth fields are defined in an IE DRX-Config. A third field includes a non-integer long DRX cycle corresponding to a frame rate, and a fourth field includes a start offset for the non-integer long DRX cycle.

In the above embodiments, a third field defines a non-integer (fractional) long DRX cycle, for example called drx-NonIntegerLongCycle, represented by two integers (a first integer and a second integer), for example called N1 and N2, where N1 denotes a numerator in fractional expressions N1/N2 of the non-integer long DRX cycle, and N2 denotes a denominator in fractional expressions N1/N2 of the non-integer long DRX cycle.

In the above embodiments, N1 and N2 may be of integer type, value ranges thereof are variation ranges of a numerator and a denominator in fractional expressions of a supported non-integer long DRX cycle respectively. In this way, for N1 and N2, any value within their respective ranges may be taken, thus expansibility is strong, and more services with different data rates may be supported.

The following is an example of a third field, showing a situation where N1 and N2 are of integer type respectively:

```
drx-NonIntegerLongCycle          SEQUENCE {

    N1                               INTEGER(25..200),

    N2                               INTEGER(3..9),

},
```

In the above embodiments, N1 and N2 may further be of enumerated type, value ranges thereof respectively include fixed values of a numerator and a denominator in fractional expressions of a supported non-integer long DRX cycle, and may further respectively include reserved spare bits. In this way, signaling overhead is smaller, a certain degree of expansibility also is maintained, and more services with different data rates may be supported.

The following is another example of a third field, showing a situation where N1 and N2 are of enumerated type respectively:

```
drx-NonIntegerLongCycle          SEQUENNCE {

    N1                               ENUMERATED   { 25, 50, 100, 125, 200, spare3, spare2, spare1},

    N2                               ENUMERATED   { 3, 9, spare2, spare1 },

},
```

In the above embodiments, by taking a third field including two integers N1 and N2 as an example, since N1 and N2 are used for indicating a non-integer cycle of XR video service by using fractions, they are actually obtained by dividing 1000 milliseconds by a frame rate and then simplifying the fraction. In some implementations, the simplifying a fraction is optional, that is, N1=1000ms and N2=frame rate are directly used. In this case, N1 does not need to be indicated, and only a frame rate needs to be indicated.

That is, the third field may further only include one integer, i.e., a second integer, such as N2, to indicate a non-integer long DRX cycle. After receiving the third field, a terminal equipment may take a quotient of 1000 milliseconds and the second integer, i.e., 1000/N2, as a non-integer long DRX cycle represented by a fraction.

In the above embodiments, a fourth field defines a start offset for a non-integer long DRX cycle, for example, called drx-StartOffsetForNonIntCycle. The fourth field may be of integer type, and a value range thereof may be from 0 to Nmax. Nmax is a value obtained by rounding down a supported maximum non-integer long DRX cycle, such as 66 milliseconds.

In the above embodiments, when a third field is configured, a fourth field must be configured. Thus, integrity of configuration of a non-integer long DRX cycle is able to be ensured.

In the above embodiments, when a third field is configured, a terminal equipment may ignore configuration of drx-LongCycleStartOffset (i.e., an integer long DRX cycle and a corresponding start offset thereof). Thus, ambiguity in a terminal behavior is avoided.

In the above embodiments, a first information element further includes a fifth field, the fifth field including a non-integer short DRX cycle corresponding to a frame rate.

In the above embodiments, for a non-integer short DRX cycle, a new fifth field may be defined in an IE DRX-Config, the fifth field defining a non-integer (fractional) short DRX cycle corresponding to a certain frame rate. The fifth field may be called, for example, drx-NonIntegerShortCycle, represented by two integers, a field design therefor is the same as a third field, and the fifth field may further be represented by the two examples mentioned above.

For example, a fifth field includes a third integer and a fourth integer, the third integer being a numerator in a fractional expression of a non-integer short DRX cycle, and the fourth integer being a denominator in a fractional expression of a non-integer short DRX cycle.

In one example, a third integer and a fourth integer are of integer type respectively, a value range of the third integer is a variation range of a numerator in a fractional expression of a supported non-integer short DRX cycle, and a value range of the fourth integer is a variation range of a denominator in a fractional expression of a supported non-integer short DRX cycle.

In another example, a third integer and a fourth integer are of enumerated type respectively, a value range of the third integer includes fixed values of a numerator in a fractional expression of a supported non-integer short DRX cycle, and may further includes reserved spare bits; a value range of the fourth integer includes fixed values of a denominator in a fractional expression of a supported non-integer short DRX cycle, and may further includes reserved spare bits.

In the above embodiments, by taking a fifth field including a third integer and a fourth integer as an example, similar to a third field, in a case where a fraction is not simplified, it is also possible not to indicate a third integer and only indicate a fourth integer, that is, a fifth field only includes a fourth integer, the fourth integer representing a non-integer short DRX cycle, and a terminal equipment takes a quotient of 1000 milliseconds and the fourth integer as a non-integer short DRX cycle represented by a fraction.

In the above embodiments, both a third field and a fifth field are rational numbers in milliseconds, indicating that a non-integer DRX cycle is defined as N1/N2 milliseconds.

In the above embodiments, if a fifth field is configured, a value of a third field must be an integer multiple of a value of the fifth field.

In the above embodiments, similar to a third field, if a fifth field is configured, a terminal equipment may ignore configuration of drx-ShortCycle (i.e., an integer short DRX cycle). Thus, ambiguity in a terminal behavior is avoided.

The above text describes implementations of a non-integer long DRX cycle, a start offset, and a non-integer short DRX cycle. In embodiments of the present disclosure, a calculation formula for a start time of a DRX On Duration may be further enhanced. That is, when determining when to start an On Duration of a non-integer DRX cycle, calculation is needed using a formula.

In addition, to solve a problem that a DRX cycle and an SFN boundary are misaligned when a system frame number (SFN) wraps around, one counter (a first counter), for example, called DRX_SFN_COUNTER, may be added, the counter is incremented by 1 each time the SFN wraps around, that is, the first counter is incremented by 1 at the first symbol time of a slot in which SFN changes to 0. An initial value of the counter is 0, and a maximum value thereof is 65535. Moreover, a time reference system frame number (SFN) for determining a start offset may further be defined, for example, called drx-TimeReferenceSFN, with a value of 0 or 512, used to determine a start time of a DRX On Duration. A terminal equipment uses an SFN closest to an indicated reference SFN preceding the received DRX configuration with the time reference SFN.

In some embodiments, the terminal equipment determines time for starting an On Duration of the non-integer DRX cycle. For example, when a DRX cycle is configured, an MAC entity of a terminal equipment determines time for starting an On Duration of a non-integer DRX cycle.

In one example,

if a short DRX cycle is used for a certain DRX group, and a non-integer short DRX cycle is configured (for example, the second field or the fifth field is configured), and currently a first counter (DRX_SFN_COUNTER), a system frame number (SFN) and a subframe number satisfy the following formula:

floor([(first counter × 10240) + (system frame number × 10) + subframe number] modulo (non-integer short DRX cycle)) = floor([(time reference system frame number × 10) + start offset] modulo (non-integer short DRX cycle)),

a terminal equipment, for the DRX group, starts an On Duration timer (drx-onDurationTimer) after a slot offset (drx-SlotOffset) duration from the beginning of a subframe corresponding to the subframe number.

In another example,

if a long DRX cycle is used for a certain DRX group, and a non-integer long DRX cycle is configured (for example, the first field or the third field is configured), and currently a first counter (DRX_SFN_COUNTER), a system frame number (SFN) and a subframe number satisfy the following formula:

floor([(first counter × 10240) + (system frame number × 10) + subframe number] modulo (non-integer long DRX cycle)) = floor([(time reference system frame number × 10) + start offset] modulo (non-integer long DRX cycle)),

a terminal equipment, for the DRX group, starts an On Duration timer after a slot offset (drx-SlotOffset) duration from the beginning of a subframe corresponding to the subframe number, in a case where downlink control information with cyclic redundancy check scrambled by power-saving radio network temporary identifier (DCP, DCI with CRC scrambled by PS_RNTI) monitoring is not configured for an active downlink BandWidth Part (BWP).

In the above formula, modulo is modulo (remainder) calculation. Since a modulo operation is performed on a rational number (i.e., non-integer DRX cycle, represented by N1/N2), in order to avoid a rounding error in calculation, "A modulo B (B=N1/N2)" in the formula may be replaced by "A - floor(A*N2/N1)*N1/N2", and calculation needs to be performed according to the order of operators in this replacement formula, so as not to produce a rounding error. Specific order refers to performing operational calculations according to an order from left to right in the formula, when calculating.

The following is an example of enhancing a DRX procedure in TS 38.321 according to the above embodiments:

---

1> if the Short DRX cycle is used for a DRX group and if the *drx-NonIntegerShortCycle* is configured for the DRX group,

and floor([(DRX_SFN_COUNTER × 10240) + (SFN × 10) + subframe number] modulo

(*drx-NonIntegerShortCycle*)) = floor([(*drx-TimeReferenceSFN* × 10) + *drx-StartOffset*] modulo

(drx-*NonIntegerShortCycle*)):

  2> start *drx-onDurationTimer* for this DRX group after *drx-SlotOffset* from the beginning of the subframe.

      …

1> if the Long DRX cycle is used for a DRX group and if the *drx-NonIntegerLongCycle* is configured for the a DRX

group, and floor([(DRX_SFN_COUNTER × 10240) + (SFN × 10) + subframe number] modulo

(*drx-NonIntegerLongCycle*)) = floor([(*drx-TimeReferenceSFN* × 10) + *drx-StartOffset*] modulo

(drx-*NonIntegerLongCycle*)):

      …

  2> start *drx-onDurationTimer* for this DRX group after *drx-SlotOffset* from the beginning of the subframe.

…

  Note: UE implementation should use A modulo (N1/N2) = A – floor(A*N2/N1)*N1/N2 with the correct order in

operations in the formula to avoid rounding errors.

---

In the above embodiments, a DRX group refers to a serving cell group having the same DRX Active Time and configured by RRC. In order to align DRX cycles of different DRX groups, the following parameters may be set to be common for all DRX groups: a non-integer long DRX cycle, a start offset, a non-integer short DRX cycle, and drx-TimeReferenceSFN. That is, in embodiments of the present disclosure, the following parameters may be shared by all DRX groups: a non-integer long DRX cycle, a start offset corresponding to the non-integer long DRX cycle, a non-integer short DRX cycle, and a time reference frame number. Meaning of each of the above parameters has already been described in the preceding text, contents thereof are incorporated here, and are not repeated here.

In some embodiments, considering that a first counter (DRX_SFN_COUNTER) is used in the above formula, the first counter needs to be synchronized, that is, same value needs to be maintained, at a network side and a terminal side. When receiving an RRC configuration about a non-integer DRX cycle (such as an RRC configuration for a non-integer long DRX cycle, i.e., the first configuration message), a terminal equipment may initialize the counter to 0 and increment the first counter by 1 at the first symbol time of a slot in which SFN changes to 0. Since the first counter is incremented by 1 each time the SFN wraps around, if a terminal equipment receives an RRC configuration about a non-integer DRX cycle immediately after the SFN wraps around (for example, SFN=0 or a very small value), due to network latency, the terminal equipment is not able to determine whether the SFN has already wrapped around when a network side transmits the configuration, thus the terminal equipment is not able to correctly initialize DRX_SFN_COUNTER, i.e., is not able to synchronize DRX_SFN_COUNTER with a network.

In the above embodiments, a terminal equipment may perform initialization of the first counter (DRX_SFN_COUNTER) according to a time reference SFN (drx-TimeReferenceSFN) carried by the RRC configuration (such as the RRC configuration for the non-integer DRX cycle, i.e., the first configuration message).

For example, when a terminal equipment receives an RRC configuration about a non-integer DRX cycle transmitted by a network side, if a value of a time reference SFN is 0, which indicates that the SFN when a network side transmits the configuration is in the first half part (i.e., SFN 0-511) of an entire SFN cycle, it is certain that no SFN wrap-around occurs when the terminal equipment receives the configuration, so the terminal equipment may set DRX_SFN_COUNTER to 0.

For another example, when a network side transmits an RRC configuration about a non-integer DRX cycle, if a value of a time reference SFN is 512, which indicates that the current SFN is in the second half part (i.e., SFN 512-1023) of an entire SFN cycle, if an SFN when the terminal equipment receives the configuration is still in the second half part of an SFN cycle, which indicates that no SFN wrap-around occurs, so the terminal equipment may set DRX_SFN_COUNTER to 0; if an SFN is in the first half part of an SFN cycle when a terminal equipment receives the configuration, which indicates that SFN wrap-around occurs, so the terminal equipment may set DRX_SFN_COUNTER to 1.

Thus, a terminal equipment performs initialization of the DRX_SFN_COUNTER according to a time reference SFN carried by a received RRC configuration for a non-integer DRX cycle, which may ensure synchronization of DRX_SFN_COUNTER between a network side and a UE side.

In the above embodiments, a non-integer DRX cycle may be a non-integer long DRX cycle, or a non-integer short DRX cycle.

The following is another example of enhancing a DRX procedure in TS 38.321 according to the above embodiments, used to achieve correct initialization of DRX_SFN_COUNTER:

1> if non-integer DRX cycle is used for a DRX group:

    2> set *DRX_SFN_COUNTER* upon successful reception of RRC (re-)configuration for DRX based on following rules:

        3> if *drx-TimeReferenceSFN* = 0, or *drx-TimeReferenceSFN* = 512 and the current SFN >=512:

            4> *DRX_SFN_COUNTER* = 0;

        3> else:

            4> *DRX_SFN_COUNTER* = 1;

    2> increment *DRX_SFN_COUNTER* by 1 in the first symbol of a slot in which SFN changes to 0;

In the above embodiments, after achieving synchronization of the DRX_SFN_COUNTER between a network side and a terminal side, a time reference SFN may be omitted in a relevant formula for the non-integer DRX cycle.

For example, when a DRX cycle is configured, an MAC entity of a terminal equipment determines time for starting an On Duration of a non-integer DRX cycle through the following method:

if a short DRX cycle is used for a certain DRX group, and a non-integer short DRX cycle is configured (for example, the second field or the fifth field is configured), and currently DRX_SFN_COUNTER, an SFN and a subframe number satisfy the following formula:

floor([(DRX_SFN_COUNTER × 10240) + (SFN × 10) + subframe number] modulo (non-integer short DRX cycle)) = floor((start offset) modulo (non-integer short DRX cycle)),

a terminal equipment, for the DRX group, starts an On Duration timer (drx-onDurationTimer) after a drx-SlotOffset (slot offset) duration from the beginning of a subframe corresponding to the subframe number.

If a long DRX cycle is used for a certain DRX group, and a non-integer long DRX cycle is configured (for example, the first field or the third field is configured), and currently DRX_SFN_COUNTER, an SFN and a subframe number satisfy the following formula:

floor([(DRX_SFN_COUNTER × 10240) + (SFN × 10) + subframe number] modulo (non-integer long DRX cycle)) = start offset, a terminal equipment, for the DRX group, starts an On Duration timer after a drx-SlotOffset (slot offset) duration from the beginning of a subframe corresponding to the subframe number, in a case when DCP (DCI with CRC scrambled by PS_RNTI) monitoring is not configured for an active downlink BandWidth Part (BWP).

It is worth noting that modulo calculation for fractions in the above formula may refer to the preceding method to avoid rounding errors.

According to the above embodiments, a problem that a DRX cycle does not support non-integer data arrival intervals is further solved.

In embodiments of the present disclosure, inventors further find that for a non-integer DRX cycle, since a rounding operation is used in a calculation formula for a start time of a DRX On Duration, as a result, a DRX cycle is on average a rational number, but a single DRX cycle is actually an integer, and each DRX cycle may not be exactly the same, there might be a difference of 1 millisecond.

FIG. 4 is a schematic diagram of an example of a DRX configuration. In an example of FIG. 4, by taking an XR service frame rate of 60fps (corresponding to a cycle of 50/3ms) as an example, a DRX cycle (which may be either a long DRX cycle or a short DRX cycle) is configured to 50/3 milliseconds, referring to a preceding configuring method. When a start offset is configured to 16ms, there may be a problem that a certain DRX cycle has no On Duration, as shown by a third cycle in FIG. 4. As a result, a terminal equipment may not be able to monitor downlink control information, thus is not able to transmit and receive data, leading to transmission delay.

For the above problem, embodiments of the present disclosure further provide solutions.

In some embodiments, a maximum value of the start offset is configured as floor(non-integer long DRX cycle)-1.

Still taking "a first information element includes a first field, the first field being a CHOICE structure and including a non-integer long DRX cycle and a start offset, which corresponding to a frame rate" as an example, a difference from preceding embodiments is that a maximum value of the start offset is no longer a value obtained by rounding down a non-integer long DRX cycle, but a value obtained by rounding down a non-integer long DRX cycle minus 1, shown as follows:

| drx-NonIntegerLongCycleStartOffset | CHOICE { |
|---|---|
| ms200/3 | INTEGER(0..<u>65</u>), |
| ms100/3 | INTEGER(0..<u>32</u>), |
| ms200/9 | INTEGER(0..<u>21</u>), |
| ms50/3 | INTEGER(0..<u>15</u>), |
| ms125/9 | INTEGER(0..<u>12</u>), |
| ms100/9 | INTEGER(0..<u>10</u>), |
| ms25/3 | INTEGER(0..<u>7</u>), |
| }, | |

According to a method in the above embodiments, a problem that a DRX cycle has no On Duration is solved.

In the above embodiments, a duration of an On Duration of a non-integer DRX cycle may be set to be longer than a duration of an On Duration of a corresponding DRX cycle when a maximum value of the start offset is other value. That is, a network side may configure a longer On Duration (i.e., a longer onDurationTimer) when configuring an offset as floor(non-integer long DRX cycle)-1. Especially after an offset floor(non-integer long DRX cycle) corresponding to expected arrival time of periodic flow, network side configures a longer On Duration, such as a value larger than a usual configuration by 1 millisecond. Thus, a problem i.e., a terminal equipment might start an On Duration in advance due to the configuration and consequently miss services that arrive later is avoided.

In the above embodiments, when a non-integer DRX cycle is configured and an actual cycle length of a previous DRX cycle is equal to a value obtained by rounding down the non-integer DRX cycle plus 1, a terminal equipment extends an On Duration of a current DRX cycle. That is, if a start offset is configured as floor(non-integer long DRX cycle)-1, and a length of a previous DRX cycle is equal to floor(non-integer long DRX cycle)+1, a terminal equipment extends an On Duration of a current DRX cycle autonomously, for example, adding 1 millisecond. Floor (non-integer long DRX cycle) + 1 is also equal to ceil (non-integer long DRX cycle). Ceil (x) refers to rounding up x. An actual length of a previous DRX cycle may be determined by subtracting start time of an On Duration of a previous DRX cycle from start time of an On Duration of a current DRX cycle. Thus, a problem i.e., a terminal equipment might start an On Duration in advance due to the configuration and consequently miss services that arrive later is avoided.

In some other embodiments, a maximum value of the start offset is still configured as floor(non-integer long DRX cycle), so UE side is enhanced.

For example, if an On Duration timer has not run after a length of a DRX cycle since a previous On Duration timer starts, a terminal equipment starts an On Duration timer. That is, when a start offset is configured as floor(non-integer long DRX cycle), if an On Duration timer has not run after a length of a DRX cycle since a previous On Duration timer starts, a terminal equipment autonomously starts the On Duration timer, i.e., initiates an On Duration. The DRX cycle here may be floor(non-integer long DRX cycle)+1 millisecond. Thus, a problem that a DRX cycle has no On Duration is also solved.

The foregoing takes a non-integer long DRX cycle as an example, the present disclosure is not limited thereto, similar principle applies to a non-integer short DRX cycle.

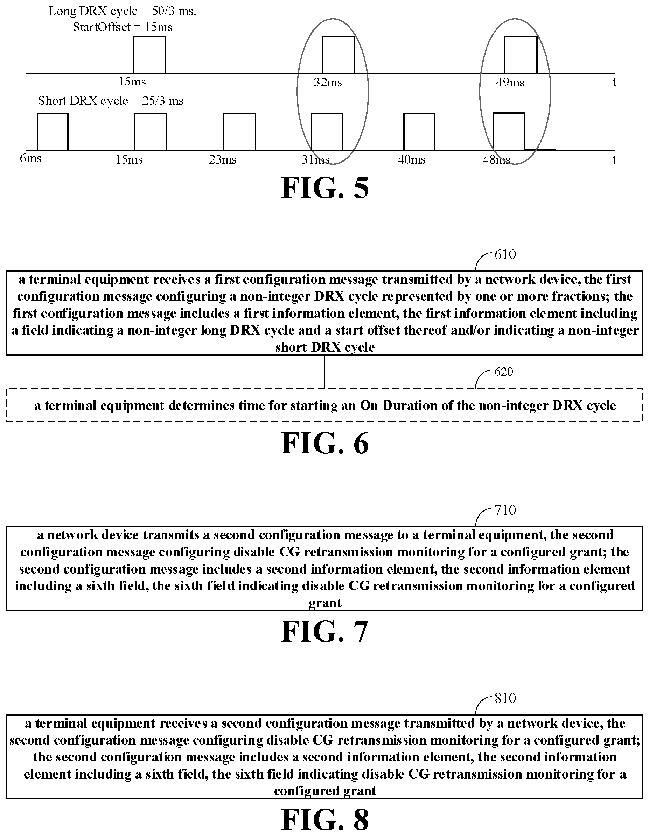

In embodiments of the present disclosure, the inventors further find that if a short DRX cycle is configured and is a non-integer, and a long DRX cycle is also a non-integer (still being multiple of a short DRX cycle), a situation in which On Durations of long and short DRX cycles are not aligned under certain configurations will occur. For example, if a long DRX cycle is configured as 50/3ms, a short DRX cycle is configured as 25/3ms, and a start offset is configured as 15ms, a situation shown in FIG. 5 may occur at certain moments. That is, at moments around 31ms and 48ms, the On Duration of the short DRX cycle and the On Duration of the long DRX cycle do not start simultaneously. Since the situation does not conform to legacy protocol standards, some unknown operations of a terminal equipment will be caused, increasing complexity of equipment development.

For the above problem, embodiments of the present disclosure further provide solutions.

In some embodiments, when a non-integer long DRX cycle is configured, a short DRX cycle is not configured. That is, for the above problem, a non-integer short DRX cycle is not defined. That is, when supporting XR services with non-integer data intervals, only a long DRX cycle is able to be configured as a non-integer, and when a non-integer long DRX cycle is configured, a short DRX cycle is not configured. This method is simple to implement and reduces design complexity.

In some other embodiments, when a non-integer short DRX cycle is configured, a long DRX cycle is an integer. That is, for the above problem, when a non-integer short DRX cycle is configured, a long DRX cycle must be an integer, i.e., the (existing) drx-LongCycleStartOffset must be used. This method retains a short DRX cycle, improves flexibility of UE energy saving, and is able to better support data bursts.

In embodiments of the present disclosure, to support better UE energy saving, for uplink scheduling transmission of a configured grant (CG), an uplink hybrid automatic repeat request (HARQ) round-trip time (RTT) timer (drx-HARQ-RTT-TimerUL) may not be started, thereby not initiating retransmission, which is particularly important for short-period, delay-sensitive XR services.

In some embodiments, the network device may further transmit second configuration message to a terminal equipment, the second configuration message configuring disable CG retransmission monitoring for a configured grant. The second configuration message may include a second information element, the second information element including a sixth field, the sixth field indicating disable CG retransmission monitoring for a configured grant.

In the above embodiments, a second configuration message may be e.g. an RRCReconfiguration message, a second information element may be e.g. an IE ConfiguredGrantConfig, and a sixth field may be called e.g. disableCG-RetransmissionMonitoring, the present disclosure is not limited thereto. According to embodiments of the present disclosure, one configuration for disabling CG retransmission monitoring may be added for each configured grant, that is, a drx-HARQ-RTT-TimerUL timer is disabled for uplink configured grant transmission. Thus, a problem that a CG does not support uplink retransmission-free is solved, enhancing UE energy saving of delay-sensitive services, such as XR services.

In the above embodiments, if a configured grant is a configured grant containing a multi-Physical Uplink Shared CHannel (PUSCH), i.e., in a CG configuration, a plurality of consecutive configured uplink grants are included in one period, a configuration of a sixth field applies to all configured uplink grants in the configuration grant, i.e., all PUSCH transmission occasions. In some embodiments, when the six field is configured, a drx-HARQ-RTT-TimerUL is disabled for all configured uplink grants in a CG. Thus, a problem that a multi-PUSCH CG does not support uplink retransmission-free is solved, enhancing UE energy saving of delay-sensitive services, such as XR services.

In some embodiments, if a serving cell of the terminal equipment is not configured with an uplink HARQ mode (uplinkHARQ-Mode), and if the sixth field is not configured for a multi-PUSCH CG to which the configured uplink grant belongs:

> if drx-LastTransmissionUL is configured, a drx-HARQ-RT-TimerUL timer is started for a corresponding HARQ process in the first symbol after the last transmission (within a bundle) of corresponding PUSCH transmission;
> otherwise, a drx-HARQ-RT-TimerUL timer is started for a corresponding HARQ process in the first symbol after the first transmission (within a bundle) of corresponding PUSCH transmission.

The following is an example of enhancing a DRX procedure in TS 38.321 according to a method in the above embodiments:

> 1> if a MAC PDU is transmitted in a configured uplink grant and LBT failure indication is not received from lower layers:
>
> 2> if this Serving Cell is configured with uplinkHARQ-Mode:
>
> …
>
> 1> else:
>
> 3> if disableCG-RetransmissionMonitoring is not configured for the configured uplink grant; or
>
> 3> if disableCG-RetransmissionMonitoring is not configured for the multi-PUSCH CG the configured uplink grant belongs to:
>
> 4>if drx-LastTransmissionUL is configured:

> 5> start the drx-HARQ-RTT-TimerUL for the corresponding HARQ process in the first symbol after the end of the last transmission (within a bundle) of the corresponding PUSCH transmission.
>
> 4>else:
>
> 5> start the drx-HARQ-RTT-TimerUL for the corresponding HARQ process in the first symbol after the end of the first transmission (within a bundle) of the corresponding PUSCH transmission.
>
> …

A method in the above embodiments may be used when a DRX cycle is a non-integer, for example, may be used in combination with a method for configuring a non-integer DRX cycle via first configuration message in the preceding embodiments, or may be used when a DRX cycle is an integer, for example, is used individually without being tied to a method for configuring a non-integer DRX cycle via first configuration message in the preceding embodiments, the present disclosure is not limited thereto.

Each of the above embodiments only exemplarily describes embodiments of the present disclosure, but the present disclosure is not limited thereto, appropriate modifications may be further made based on each of the above embodiments. For example, each of the above embodiments may be used individually, or one or more of the above embodiments may be combined.

Embodiments of the present disclosure further provide a method for determining a DRX cycle, which is described from a terminal equipment side. It should be noted that the method is UE-side processing corresponding to a method for configuring a DRX cycle in the foregoing embodiments, and contents identical to those in the foregoing embodiments are not repeated.

FIG. 6 is a schematic diagram of a method for determining a DRX cycle in embodiments of the present disclosure, as shown in FIG. 6, the method includes:

610: a terminal equipment receives a first configuration message transmitted by a network device, the first configuration message configuring a non-integer DRX cycle represented by one or more fractions; the first configuration message includes a first information element, the first information element including a field indicating a non-integer long DRX cycle and a start offset thereof and/or indicating a non-integer short DRX cycle.

In some embodiments, as described above, if a first field is configured, the terminal equipment ignores configuration of an integer long DRX cycle and a corresponding start offset thereof.

In some embodiments, as described above, in a case where a third field only includes a second integer, a terminal equipment may take a quotient of 1000 milliseconds and the second integer as a non-integer long DRX cycle represented by a fraction.

In some embodiments, as described above, if a third field is configured, a terminal equipment ignores configuration of an integer long DRX cycle and a corresponding start offset thereof.

In some embodiments, as shown in FIG. 6, the method may further include:

620: a terminal equipment determines time for starting an On Duration of the non-integer DRX cycle. A method for determining the time for starting an On Duration of the non-integer DRX cycle has been described in the preceding text and is not repeated here.

In the above embodiments, as described above, if a maximum value of the start offset is a value obtained by rounding down a non-integer DRX cycle minus 1, then if an On Duration timer has not run after a length of a DRX cycle since a previous On Duration timer starts, a terminal equipment may start an On Duration timer.

According to a method in embodiments of the present disclosure, a problem that a DRX cycle does not support a non-integer data arrival interval is solved, uplink retransmission-free transmission of multi-PUSCH configured grants is supported, thereby achieving UE energy saving.

Embodiments of a Second Aspect

Embodiments of the present disclosure provide a method for configuring a DRX, which is described from a network device side. Contents same as those in embodiments of the first aspect are not repeated again.

FIG. 7 is a schematic diagram of a method for configuring a DRX in embodiments of the present disclosure, referring to FIG. 7, the method includes:

710: a network device transmits a second configuration message to a terminal equipment, the second configuration message configuring disable CG retransmission monitoring for a configured grant; the second configuration message includes a second information element, the second information element including a sixth field, the sixth field indicating disable CG retransmission monitoring for a configured grant.

It is worth noting that the above FIG. 7 only schematically describes embodiments of the present disclosure, however the present disclosure is not limited thereto. For example, some other operations may be added or certain operations therein may be reduced. Persons skilled in the art may make appropriate modifications according to the above contents, not being limited to records in the above FIG. 7.

According to the above embodiments, by adding a configuration for disable CG retransmission monitoring for each configured grant, i.e., a drx-HARQ-RTT-TimerUL timer is disabled for uplink configured grant transmission, a problem of not supporting uplink retransmission-free in a case where a CG includes a multi-PUSCH CG is solved, which enhances UE energy saving for delay-sensitive services, such as XR services.

In some embodiments, the second configuration message is an RRCReconfiguration message, and the second information element is an IE ConfiguredGrantConfig. The present disclosure is not limited thereto.

In some embodiments, when the six field is configured, a drx-HARQ-RTT-TimerUL is disabled for all configured uplink grants in the configured grant.

In the above embodiments, the configured grant is a configured grant containing a multi-Physical Uplink Shared CHannel (PUSCH), i.e., in a CG configuration, a plurality of consecutive configured uplink grants are included in one period, a configuration of a sixth field applies to all configured uplink grants in the configuration grant, i.e., all PUSCH transmission occasions.

In some embodiments, if a serving cell of the terminal equipment is not configured with an uplink HARQ mode, and if the sixth field is not configured for a multi-PUSCH CG to which the configured uplink grant belongs:

if drx-LastTransmissionUL is configured, a drx-HARQ-RT-TimerUL timer is started for a corresponding HARQ process in the first symbol after the last transmission of corresponding PUSCH transmission;
otherwise, a drx-HARQ-RT-TimerUL timer is started for a corresponding HARQ process in the first symbol after the first transmission of corresponding PUSCH transmission.

Embodiments of the present disclosure further provide a method for implementing a DRX configuration, which is described from a terminal equipment side. It should be noted that the method is UE-side processing corresponding to a method for configuring a DRX in the foregoing embodiments, and contents identical to those in the foregoing embodiments are not repeated.

FIG. 8 is a schematic diagram of a method for implementing a DRX configuration in embodiments of the present disclosure, as shown in FIG. 8, the method includes:

810: a terminal equipment receives a second configuration message transmitted by a network device, the second configuration message configuring disable CG retransmission monitoring for a configured grant; the second configuration message includes a second information element, the second information element including a sixth field, the sixth field indicating disable CG retransmission monitoring for a configured grant.

In some embodiments, as described above, if a serving cell of the terminal equipment is not configured with an uplink HARQ mode, and if the sixth field is not configured for a multi-PUSCH CG to which the configured uplink grant belongs:

if drx-LastTransmissionUL is configured, a terminal equipment starts a drx-HARQ-RT-TimerUL timer for a corresponding HARQ process in the first symbol after the last transmission of corresponding PUSCH transmission; otherwise, a terminal equipment starts a drx-HARQ-RT-TimerUL timer for a corresponding HARQ process in the first symbol after the first transmission of corresponding PUSCH transmission.

Each of the above embodiments only exemplarily describes embodiments of the present disclosure, but the present disclosure is not limited thereto, appropriate modifications may be further made based on each of the above embodiments. For example, each of the above embodiments may be used individually, or one or more of the above embodiments may be combined.

According to a method in embodiments of the present disclosure, a problem of not supporting uplink retransmission-free transmission in a case where a CG includes a multi-PUSCH CG is solved, which enhances UE energy saving for delay-sensitive services, such as XR services.

Embodiments of a Third Aspect

Embodiments of the present disclosure provide an apparatus for configuring a DRX cycle.

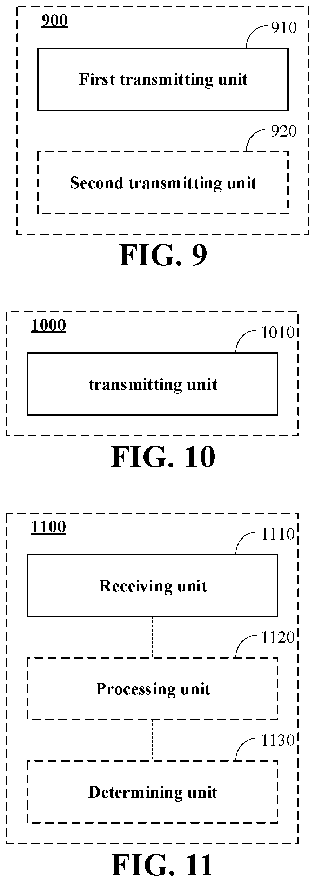

FIG. 9 is a schematic diagram of an apparatus for configuring a DRX cycle in embodiments of the present disclosure, the apparatus may be e.g., a network device, or may be one or more parts or components configured in the network device. A principle of the apparatus to solve problems is same as the method shown in FIG. 3 in embodiments of the first aspect, thus a specific implementation thereof may refer to implementation of the method shown in FIG. 3 in embodiments of the first aspect, the same contents are not repeated.

As shown in FIG. 9, the apparatus 900 for configuring a DRX cycle includes:

a first transmitting unit 910 configured to transmit a first configuration message to a terminal equipment, the first configuration message configuring a non-integer DRX cycle represented by one or more fractions; the first configuration message includes a first information element, the first information element including a field indicating a non-integer long DRX cycle and a start offset thereof and/or indicating a non-integer short DRX cycle.

In some embodiments, the first configuration message is an RRCReconfiguration message.

In some embodiments, the first information element is an IE DRX-Config.

In some embodiments, the first information element includes a first field, the first field including a combination of a non-integer long DRX cycle corresponding to a frame rate, and a start offset.

In the above embodiments, the first field may be a CHOICE structure, each element in the CHOICE structure is a predefined combination of a non-integer long DRX cycle corresponding to a certain frame rate, and a corresponding start offset in milliseconds thereof.

In the above embodiments, the non-integer long DRX cycle may be represented as a fraction in milliseconds, the fraction being represented by an integer numerator and denominator, and a value range of a start offset corresponding to each non-integer long DRX cycle is from 0 to a value obtained by rounding down the non-integer long DRX cycle.

In the above embodiments, the non-integer long DRX cycle may include a plurality of fractional values, the fractional values respectively corresponding to the following frame rates: 15fps, 30fps, 45fps, 60fps, 72fps, 90fps, 120fps.

In the above embodiments, if the first field is configured, a terminal equipment may ignore configuration of an integer long DRX cycle and a corresponding start offset thereof.

In the above embodiments, the first information element may further include a second field, the second field including a non-integer short DRX cycle corresponding to a frame rate.

In the above embodiments, the second field may be of an enumeration type.

In the above embodiments, the non-integer short DRX cycle may be represented by a fraction in milliseconds.

In the above embodiments, if the second field is configured, a value of a non-integer long DRX cycle in the first field is an integer multiple of a value of a non-integer short DRX cycle in the second field.

In the above embodiments, if the second field is configured, a terminal equipment may ignore configuration of an integer short DRX cycle.

In some other embodiments, a first information element includes a third field and a fourth field, the third field including a non-integer long DRX cycle corresponding to a frame rate, and the fourth field including a start offset for the non-integer long DRX cycle.

In the above embodiments, the third field may include a first integer and a second integer, the first integer being a numerator in a fractional expression of a non-integer long DRX cycle, and the second integer being a denominator in a fractional expression of a non-integer long DRX cycle.

In the above embodiments, a value range of the first integer may be a variation range of a numerator in a fractional expression of a supported non-integer long DRX cycle, and a value range of the second integer may be a variation range of a denominator in a fractional expression of a supported non-integer long DRX cycle.

In the above embodiments, the first integer and the second integer may be of enumerated type respectively, a value range of the first integer includes fixed values of a numerator in a fractional expression of a supported non-integer long DRX cycle, and a value range of the second integer includes fixed values of a denominator in a fractional expression of a supported non-integer long DRX cycle, and may further include reserved spare bits.

In the above embodiments, the third field may only include the second integer, the second integer representing a non-integer long DRX cycle, and a terminal equipment takes a quotient of 1000 milliseconds and the second integer as a non-integer long DRX cycle represented by a fraction.

In the above embodiments, the fourth field may be of integer type, a value range thereof is from 0 to a value obtained by rounding down a supported maximum non-integer long DRX cycle.

In the above embodiments, when the third field is configured, the fourth field must be configured.

In the above embodiments, when the third field is configured, a terminal equipment may ignore configuration of an integer long DRX cycle and a corresponding start offset thereof.

In the above embodiments, the first information element may further include a fifth field, the fifth field including a non-integer short DRX cycle corresponding to a frame rate.

In the above embodiments, the fifth field may include a third integer and a fourth integer, the third integer being a numerator in a fractional expression of the non-integer short DRX cycle, and the fourth integer being a denominator in a fractional expression of the non-integer short DRX cycle.

In the above embodiments, a value range of the third integer may be a variation range of a numerator in a fractional expression of a supported non-integer short DRX cycle, and a value range of the fourth integer may be a variation range of a denominator in a fractional expression of a supported non-integer short DRX cycle.

In the above embodiments, the third integer and the fourth integer may be of enumerated type respectively, a value range of the third integer includes fixed values of a numerator in a fractional expression of a supported non-integer short DRX cycle, and a value range of the fourth integer includes fixed values of a denominator in a fractional expression of a supported non-integer short DRX cycle, and may further include reserved spare bits.

In the above embodiments, the fifth field may further only include the fourth integer, the fourth integer representing a non-integer short DRX cycle, and a terminal equipment takes a quotient of 1000 milliseconds and the fourth integer as a non-integer short DRX cycle represented by a fraction.

In the above embodiments, if the fifth field is configured, a value of a non-integer long DRX cycle in the third field is an integer multiple of a value of a non-integer short DRX cycle in the fifth field.

In some embodiments, a terminal equipment determines time for starting an On Duration of the non-integer DRX cycle.

In the above embodiments, in some implementations, if a short DRX cycle is used for a certain DRX group, and a non-integer short DRX cycle is configured, and currently a first counter, a system frame number and a subframe number satisfy the following formula:

floor([(first counter × 10240) + (system frame number × 10) + subframe number] modulo (non-integer short DRX cycle)) = floor([(time reference system frame number × 10) + start offset] modulo (non-integer short DRX cycle)),

a terminal equipment, for the DRX group, starts an On Duration timer after a slot offset duration from the beginning of a subframe corresponding to the subframe number.

In the above embodiments, in some other implementations, if a long DRX cycle is used for a certain DRX group, and a non-integer long DRX cycle is configured, and currently a first counter, a system frame number and a subframe number satisfy the following formula:

floor([(first counter × 10240) + (system frame number × 10) + subframe number] modulo (non-integer long DRX cycle)) = floor([(time reference system frame number × 10) + start offset] modulo (non-integer long DRX cycle)),

a terminal equipment, for the DRX group, starts an On Duration timer after a slot offset duration from the beginning of a subframe corresponding to the subframe number, in a case where Downlink control information with Cyclic redundancy check scrambled by Power-saving radio network temporary identifier (DCP) monitoring is not configured for an active downlink bandwidth part.

In the above embodiments, A module B in the above formula may be replaced by A - floor(A*N2/N1)*N1/N2, where B = N1/N2, and calculation is performed according to an order of operators from left to right in A - floor(A*N2/N1) *N1/N2.

In the above embodiments, the following parameters may be shared by each of the DRX groups: a non-integer long DRX cycle, a start offset corresponding to the non-integer long DRX cycle, a non-integer short DRX cycle, and a time reference frame number.

In some embodiments, a terminal equipment may further initialize the first counter, for example, initializes the first counter to 0 when the first configuration message is received, and increments the first counter by 1 at the first symbol time of a slot in which SFN changes to 0.

In some embodiments, a terminal equipment may initialize the first counter according to a time reference SFN contained in a received first configuration message.

For example, if the time reference SFN is 0, the terminal equipment initializes the first counter to 0 when the first configuration message is received.

For another example, if the time reference SFN is 512, the terminal equipment initializes the first counter to 0 in a case where an SFN when the first configuration message is received is in a second half part of an SFN cycle, and initializes the first counter to 1 in a case where an SFN when the first configuration message is received is in a first half part of an SFN cycle.

According to the above method, synchronization of first counters at a network side and a terminal side is able to be achieved.

In the above embodiments, since synchronization of first counters has been achieved at a network side and a terminal side, the time reference SFN in the above formula may be omitted.

For example, when a terminal equipment determines time for starting an On Duration of a non-integer DRX cycle, if a short DRX cycle is used for a certain DRX group, and a non-integer short DRX cycle is configured, and currently a first counter, an SFN and a subframe number satisfy the following formula:

floor([(first counter $\times$ 10240) + (SFN $\times$ 10) + subframe number] modulo (non-integer short DRX cycle)) = floor((start offset) modulo (non-integer short DRX cycle)),

the terminal equipment, for the DRX group, starts an On Duration timer after a slot offset duration from the beginning of a subframe corresponding to the subframe number.

For another example, when a terminal equipment determines time for starting an On Duration of a non-integer DRX cycle, if a long DRX cycle is used for a certain DRX group, and a non-integer long DRX cycle is configured, and currently a first counter, an SFN and a subframe number satisfy the following formula:

floor([(first counter $\times$ 10240) + (SFN $\times$ 10) + subframe number] modulo (non-integer long DRX cycle)) = start offset, the terminal equipment, for the DRX group, starts an On Duration timer after a slot offset duration from the beginning of a subframe corresponding to the subframe number, in a case where DCP monitoring is not configured for an active downlink bandwidth part.

In some embodiments, a maximum value of the start offset is configured to be a value obtained by rounding down a non-integer DRX cycle minus 1.

In the above embodiments, a duration of an On Duration of the non-integer DRX cycle may be greater than a duration of an On Duration of a DRX cycle when a maximum value of the start offset is other value.

In the above embodiments, when a non-integer DRX cycle is configured and an actual cycle length of a previous DRX cycle is equal to a value obtained by rounding down the non-integer DRX cycle plus 1, the terminal equipment may extend an On Duration of a current DRX cycle.

In some other embodiments, a maximum value of the start offset is configured to be a value obtained by rounding down a non-integer DRX cycle.

In the above embodiments, if an On Duration timer has not run after a length of a DRX cycle since a previous On Duration timer starts, the terminal equipment starts an On Duration timer.

In each of the above embodiments, the non-integer DRX cycle may be a non-integer long DRX cycle, and/or a non-integer short DRX cycle.

In some embodiments, when a non-integer long DRX cycle is configured, a short DRX cycle is not configured, or when a non-integer short DRX cycle is configured, a long DRX cycle is an integer.

In some embodiments, as shown in FIG. 9, the apparatus 900 further includes:

a second transmitting unit 920 configured to transmit a second configuration message to a terminal equipment, the second configuration message configuring disable CG retransmission monitoring for a configured grant; the second configuration message includes a second information element, the second information element including a sixth field, the sixth field indicating disable CG retransmission monitoring for a configured grant.

In the above embodiments, the second configuration message may be an RRCReconfiguration message, and the second information element may be an IE ConfiguredGrantConfig.

In the above embodiments, when the six field is configured, a drx-HARQ-RTT-TimerUL is disabled for all configured uplink grants in a configured grant.

In the above embodiments, if a serving cell of the terminal equipment is not configured with an uplink HARQ mode, and if the sixth field is not configured for a multi-PUSCH CG to which the configured uplink grant belongs:

if drx-LastTransmissionUL is configured, the terminal equipment starts a drx-HARQ-RT-TimerUL timer for a corresponding HARQ process in the first symbol after the last transmission of corresponding PUSCH transmission; otherwise, the terminal equipment starts a drx-HARQ-RT-TimerUL timer for a corresponding HARQ process in the first symbol after the first transmission of corresponding PUSCH transmission.

Embodiments of the present disclosure further provide an apparatus for configuring a DRX.

FIG. 10 is a schematic diagram of an apparatus for configuring a DRX in embodiments of the present disclosure, the apparatus may be e.g., a network device, or may be one or more parts or components configured in the network device. A principle of the apparatus to solve problems is same as the method shown in FIG. 7 in embodiments of the second aspect, thus a specific implementation thereof may refer to implementation of the method shown in FIG. 7 in embodiments of the second aspect, the same contents are not repeated.

As shown in FIG. 10, the apparatus 1000 for configuring a DRX includes:

a transmitting unit 1010 configured to transmit a second configuration message to a terminal equipment, the second configuration message configuring disable CG retransmission monitoring for a configured grant; the second configuration message includes a second information element, the second information element including a sixth field, the sixth field indicating disable CG retransmission monitoring for a configured grant.

In some embodiments, the second configuration message is an RRCReconfiguration message, and the second information element is an IE ConfiguredGrantConfig.

In some embodiments, when the six field is configured, a drx-HARQ-RTT-TimerUL is disabled for all configured uplink grants in the configured grant.

In some embodiments, if a serving cell of the terminal equipment is not configured with an uplink HARQ mode, and if the sixth field is not configured for a multi-PUSCH CG to which the configured uplink grant belongs:

if drx-LastTransmissionUL is configured, the terminal equipment starts a drx-HARQ-RT-TimerUL timer for a corresponding HARQ process in the first symbol after the last transmission of corresponding PUSCH transmission; otherwise, the terminal equipment starts a drx-HARQ-RT-TimerUL timer for a corresponding HARQ process in the first symbol after the first transmission of corresponding PUSCH transmission.

Embodiments of the present disclosure further provide an apparatus for determining a DRX cycle.

FIG. 11 is a schematic diagram of an apparatus for determining a DRX cycle in embodiments of the present disclosure, the apparatus may be e.g., a terminal equipment, or may be one or more parts or components configured in the terminal equipment. A principle of the apparatus to solve problems is same as the method shown in FIG. 6 in embodiments of the first aspect, and the apparatus corresponds to the apparatus shown in FIG. 9 in the above embodiments, thus a specific implementation thereof may refer to implementation of the method shown in FIG. 6 in embodiments of the first aspect and implementation of the apparatus shown in FIG. 9 in the above embodiments, the same contents are not repeated.

As shown in FIG. 11, the apparatus 1100 for determining a DRX cycle includes:

a receiving unit 1110 configured to receive a first configuration message transmitted by a network device, the first configuration message configuring a non-integer DRX cycle represented by one or more fractions; the first configuration message includes a first information element, the first information element including a field indicating a non-integer long DRX cycle and a start offset thereof and/or indicating a non-integer short DRX cycle.

In some embodiments, as shown in FIG. 11, the apparatus 1100 further includes a processing unit 1120.

In some embodiments, as described above, if the first field is configured, the processing unit 1120 ignores configuration of an integer long DRX cycle and a corresponding start offset thereof.

In some embodiments, as described above, in a case where a third field only includes a second integer, the processing unit 1120 may take a quotient of 1000 milliseconds and the second integer as the non-integer long DRX cycle represented by a fraction.

In some embodiments, as described above, if a third field is configured, the processing unit 1120 ignores configuration of an integer long DRX cycle and a corresponding start offset thereof.

In some embodiments, as shown in FIG. 11, the apparatus 1100 may further include:

a determining unit 1130 configured to determine time for starting an On Duration of the non-integer DRX cycle. A method for determining time for starting an On Duration of the non-integer DRX cycle has been described in the preceding text and is not repeated here.

In the above embodiments, as described above, if a maximum value of the start offset is a value obtained by rounding down a non-integer DRX cycle minus 1, then if an On Duration timer has not run after a length of a DRX cycle since a previous On Duration timer starts, the determining unit 1130 may start an On Duration timer.

Embodiments of the present further disclosure provide an apparatus for implementing a DRX configuration.

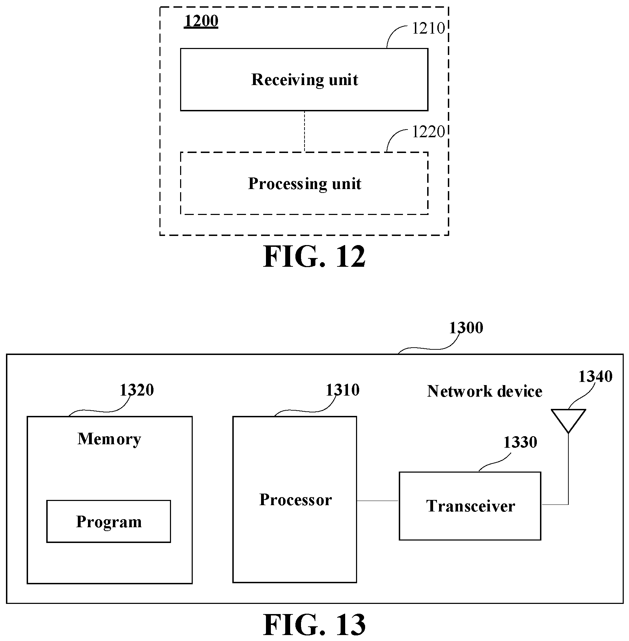

FIG. 12 is a schematic diagram of an apparatus for implementing a DRX configuration in embodiments of the present disclosure, the apparatus may be e.g., a terminal equipment, or may be one or more parts or components configured in the terminal equipment. A principle of the apparatus to solve problems is same as the method shown in FIG. 8 in embodiments of the second aspect, and the apparatus corresponds to the apparatus shown in FIG. 10 in the above embodiments, thus a specific implementation thereof may refer to implementation of the method shown in FIG. 8 in embodiments of the second aspect and implementation of the apparatus shown in FIG. 10 in the above embodiments, the same contents are not repeated.

As shown in FIG. 12, the apparatus 1200 for implementing a DRX configuration includes:

a receiving unit 1210 configured to receive a second configuration message transmitted by a network device, the second configuration message configuring disable CG retransmission monitoring for a configured grant; the second configuration message includes a second information element, the second information element including a sixth field, the sixth field indicating disable CG retransmission monitoring for a configured grant.

In some embodiments, as shown in FIG. 12, the apparatus 1200 may further include a processing unit 1220.

In some embodiments, as described above, if a serving cell of the terminal equipment is not configured with an uplink HARQ mode, and if the sixth field is not configured for a multi-PUSCH CG to which the configured uplink grant belongs:

if drx-LastTransmissionUL is configured, the processing unit 1220 starts a drx-HARQ-RT-TimerUL timer for a corresponding HARQ process in the first symbol after the last transmission of corresponding PUSCH transmission;

otherwise, the processing unit 1220 starts a drx-HARQ-RT-TimerUL timer for a corresponding HARQ process in the first symbol after the first transmission of corresponding PUSCH transmission.

It is worth noting that the above text only describes components or modules related to the present disclosure, however the present disclosure is not limited thereto. Apparatuses 900, 1000, 1100, 1200 in embodiments of the present disclosure may further include other components or modules. For detailed contents of these components or modules, relevant technologies may be referred to.

Moreover, for the sake of simplicity, FIG. 9 to FIG. 12 only exemplarily show a connection relationship or signal direction between components or modules, however persons skilled in the art should know that various relevant technologies such as bus connection may be adopted. Each of the above components or modules may be implemented via a hardware facility such as a processor, a memory, a transmitter, a receiver, etc. Embodiments of the present disclosure do not impose limitations thereto.

According to apparatuses in embodiments of the present disclosure, an effect of UE energy saving is reached.

Embodiments of a Fourth Aspect

Embodiments of the present disclosure provide a communication system, including a terminal equipment and a network device, the network device being configured to perform the method described in embodiments of the first aspect or second aspect. Behaviors of the network device have been described in detail in embodiments of the first to third aspects, contents thereof are incorporated here and are not repeated here.

Embodiments of the present disclosure further provide a network device, including a memory configured to store a computer program, and a processor configured to perform the computer program to implement the method described in FIG. 3 in embodiments of the first aspect or the method described in FIG. 7 in embodiments of the second aspect.

FIG. 13 is a schematic diagram of a network device in embodiments of the present disclosure. As shown in FIG. 13, a network device 1300 may include: a central processing unit (CPU) 1310 and a memory 1320, the memory 1320 being coupled to the central processing unit 1310. The memory 1320 may store various data; moreover, also stores a program for information processing, and executes the program under the control of the central processor 1310, so as to receive various information transmitted by a terminal equipment and transmit various information to a terminal equipment.

For example, the processor 1310 may be configured to execute a program to implement the method described in FIG. 3 in embodiments of the first aspect or the method described in FIG. 7 in embodiments of the second aspect.

In addition, as shown in FIG. 13, the network device 1300 may further include a transceiver 1330 and an antenna 1340, etc., wherein functions of said components are similar to related arts, and are not repeated here. It is worth noting that the network device 1300 does not have to include all components shown in FIG. 3. Moreover, the network device 1300 may further include components not shown in FIG. 13, related arts may be referred to.

Embodiments of the present disclosure further provide a terminal equipment, including a memory configured to store a computer program, and a processor configured to perform the computer program to implement the method described in FIG. 6 in embodiments of the first aspect or the method described in FIG. 8 in embodiments of the second aspect.

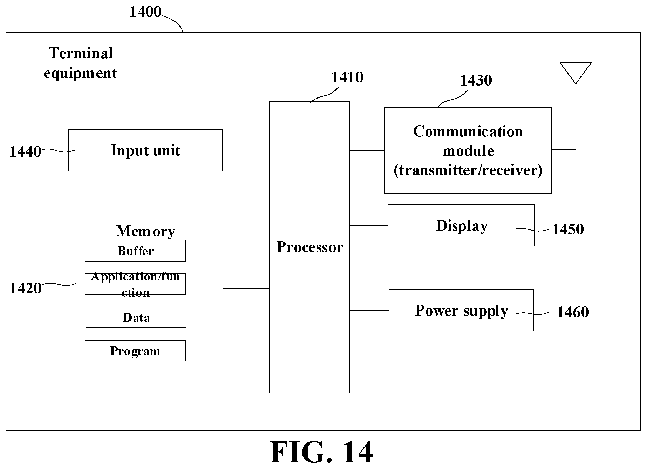

FIG. 14 is a schematic diagram of a terminal equipment in embodiments of the present disclosure. As shown in FIG. 14, the terminal equipment 1400 may include a processor 1410, and a memory 1420 storing data and programs and being coupled to the processor 1410. It is worth noting that this figure is exemplary, other types of structures may further be used to supplement or replace this structure, so as to implement a telecommunication function or other functions.

For example, the processor 1410 may be configured to execute a program to implement the method described in FIG. 6 in embodiments of the first aspect or the method described in FIG. 8 in embodiments of the second aspect.

As shown in FIG. 14, the terminal equipment 1400 may further include: a communication module 1430, an input unit 1440, a display 1450, and a power supply 1460. Functions of the above components are similar to related arts, and are not further elaborated here. It is worth noting that the terminal equipment 1400 does not have to include all components shown in FIG. 14, said components are not indispensable. Moreover, the terminal equipment 1400 may further include components not shown in FIG. 14, related arts may be referred to.

Embodiments of the present disclosure further provide a computer readable program, wherein when a network device executes the program, the program enables a computer to execute the method described in FIG. 3 in embodiments of the first aspect or the method described in FIG. 7 in embodiments of the second aspect, in the network device.

Embodiments of the present disclosure further provide a storage medium in which a computer readable program is stored, wherein the computer readable program enables a computer to execute the method described in FIG. 3 in embodiments of the first aspect or the method described in FIG. 7 in embodiments of the second aspect, in a network device.

Embodiments of the present disclosure further provide a computer readable program, wherein when a terminal equipment executes the program, the program enables a computer to execute the method described in FIG. 6 in embodiments of the first aspect or the method described in FIG. 8 in embodiments of the second aspect, in the terminal equipment.

Embodiments of the present disclosure further provide a storage medium in which a computer readable program is stored, wherein the computer readable program enables a computer to execute the method described in FIG. 6 in embodiments of the first aspect or the method described in FIG. 8 in embodiments of the second aspect, in a terminal equipment.

Apparatuses and methods in the present disclosure may be implemented by hardware, or may be implemented by combining hardware with software. The present disclosure relates to such a computer readable program, when the program is executed by a logic component, the logic component is able to implement the apparatuses described in the above text or a constituent component, or the logic component is able to implement various methods or steps described in the above text. A logic component is e.g. a field programmable logic component, a microprocessor, a processor used in a computer, etc. The present disclosure further relates to a storage medium storing said programs, such as a hard disk, a magnetic disk, an optical disk, a DVD, a flash memory and the like.

By combining with methods/apparatuses described in embodiments of the present disclosure, it may be directly embodied as hardware, a software module executed by a processor, or a combination of the two. For example, one or more of functional block diagrams as shown in the drawings or one or more combinations of functional block diagrams may correspond to software modules of a computer program process, or may correspond to hardware modules. These software modules may respectively correspond to steps shown in the drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in the art. A storage medium may be coupled to a processor, thus enabling the processor to read information from the storage medium, and write information into the storage medium, or the storage medium may be a constituent part of a processor. A processor and a storage medium may be located in an ASIC. The software module may be stored in a memory of a mobile terminal, or may be stored in a memory card of an insertable mobile terminal. For example, if a device (e.g., a mobile terminal) adopts a MEGA-SIM card with a larger capacity or a flash memory apparatus with a large capacity, the software module may be stored in the MEGA-SIM card, or the flash memory apparatus with a large capacity.

One or more of functional block diagrams described in the drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in the drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described above by combining with specific implementations, however persons skilled in the art should clearly know that these descriptions are exemplary and do not limit a protection scope of the present disclosure. Persons skilled in the art may make various variations and amendments to the present disclosure according to a spirit and principle of the present disclosure, these variations and amendments are also within a scope of the present disclosure.

Regarding the above implementations disclosed in this embodiment, the following supplements are further disclosed:

1. A method for configuring a DRX cycle, wherein the method includes:

transmitting a first configuration message by a network device to a terminal equipment, the first configuration message configuring a non-integer DRX cycle represented by one or more fractions;
the first configuration message includes a first information element, the first information element including a field indicating a non-integer long DRX cycle and a start offset thereof and/or indicating a non-integer short DRX cycle.

2. The method according to supplement 1, wherein,

the first information element further includes a fifth field, the fifth field including a non-integer short DRX cycle corresponding to a frame rate;
the fifth field includes a third integer and a fourth integer; and
the third integer is a numerator in a fractional expression of the non-integer short DRX cycle, and the fourth integer is a denominator in a fractional expression of the non-integer short DRX cycle.

3. The method according to supplement 2, wherein,

the third integer and the fourth integer are of enumerated type, respectively;
a value range of the third integer includes fixed values of a numerator in a fractional expression of a supported non-integer short DRX cycle; and
a value range of the fourth integer includes fixed values of a denominator in a fractional expression of a supported non-integer short DRX cycle.

4. The method according to supplement 1, wherein,

the first information element further includes a fifth field, the fifth field including a non-integer short DRX cycle corresponding to a frame rate;
the fifth field includes a fourth integer; and
the fourth integer represents a non-integer short DRX cycle, and the terminal equipment takes a quotient of 1000 milliseconds and the fourth integer as a non-integer short DRX cycle represented by a fraction.

5. The method according to supplement 1, wherein,

the terminal equipment determines time for starting an On Duration of the non-integer DRX cycle, wherein,
if a short DRX cycle is used for a certain DRX group, and a non-integer short DRX cycle is configured, and currently a first counter, a system frame number and a subframe number satisfy the following formula:

floor([(first counter $\times$ 10240) + (system frame number $\times$ 10) + subframe number] modulo (non-integer short DRX cycle)) = floor([(time reference system frame number $\times$ 10) + start offset] modulo (non-integer short DRX cycle)),

the terminal equipment, for the DRX group, starts an On Duration timer after a slot offset duration from the beginning of a subframe corresponding to the subframe number.

6. The method according to supplement 1, wherein,

the terminal equipment determines time for starting an On Duration of the non-integer DRX cycle, wherein, if a long DRX cycle is used for a certain DRX group, and a non-integer long DRX cycle is configured, and currently a first counter, a system frame number and a subframe number satisfy the following formula:

floor([(first counter $\times$ 10240) + (system frame number $\times$ 10) + subframe number] modulo (non-integer long DRX cycle)) = floor([(time reference system frame number $\times$ 10) + start offset] modulo (non-integer long DRX cycle)),

the terminal equipment, for the DRX group, starts an On Duration timer after a slot offset duration from the beginning of a subframe corresponding to the subframe number, in a case where Downlink control information with Cyclic redundancy check scrambled by Power-saving radio network temporary identifier (DCP) monitoring is not configured for an active downlink bandwidth part.

7. The method according to supplement 5 or 6, wherein,

A module B in the formula is replaced by A - floor(A*N2/N1)*N1/N2;
where B = N1/N2, and calculation is performed according to an order of operators from left to right in the A - floor(A*N2/N1)*N1/N2.

8. The method according to supplement 5 or 6, wherein,
each of the DRX groups shares the following parameters: a non-integer long DRX cycle, a start offset corresponding to the non-integer long DRX cycle, a non-integer short DRX cycle, and a time reference frame number.
9. The method according to supplement 1, wherein,
when the non-integer long DRX cycle is configured, a short DRX cycle is not configured, or when the non-integer short DRX cycle is configured, a long DRX cycle is an integer.
10. The method according to supplement 5 or 6, wherein,
the terminal equipment initializes the first counter to 0 when the first configuration message is received, and the terminal equipment increments the first counter by 1 at the first symbol time of a slot in which SFN changes to 0.

**Claims**

1. An apparatus for configuring a DRX cycle, configured in a network device, wherein the apparatus comprises:

a first transmitting unit configured to transmit a first configuration message to a terminal equipment, the first configuration message configuring a non-integer DRX cycle represented by one or more fractions; and
the first configuration message includes a first information element, the first information element including a field indicating a non-integer long DRX cycle and a start offset thereof and/or indicating a non-integer short DRX cycle.

2. The apparatus according to claim 1, wherein,
the first information element is an IE DRX-Config.

3. The apparatus according to claim 1, wherein,

the first information element includes a first field and a second field;
the first field includes a combination of a non-integer long DRX cycle corresponding to a frame rate, and a start offset; and
the second field includes a non-integer short DRX cycle corresponding to a frame rate.

4. The apparatus according to claim 3, wherein,
the first field is a CHOICE structure, each element in the CHOICE structure is a predefined combination of a non-integer long DRX cycle corresponding to a certain frame rate, and a corresponding start offset in milliseconds thereof.

5. The apparatus according to claim 4, wherein,

the non-integer long DRX cycle is represented by a fraction in milliseconds, and the fraction is represented by an integer numerator and an integer denominator; and

a value range of a start offset corresponding to each non-integer long DRX cycle is from 0 to a value obtained by rounding down the non-integer long DRX cycle.

6. The apparatus according to claim 4, wherein,
   if the first field is configured, the terminal equipment ignores configuration of an integer long DRX cycle and a corresponding start offset thereof.

7. The apparatus according to claim 3, wherein,
   the non-integer short DRX cycle is represented by a fraction in milliseconds.

8. The apparatus according to claim 3, wherein,

   if the second field is configured, a value of a non-integer long DRX cycle in the first field is an integer multiple of a value of a non-integer short DRX cycle in the second field; and/or,
   if the second field is configured, the terminal equipment ignores configuration of an integer short DRX cycle.

9. The apparatus according to claim 1, wherein,

   the terminal equipment determines time for starting an On Duration of the non-integer DRX cycle, wherein,
   if a short DRX cycle is used for a certain DRX group, and a non-integer short DRX cycle is configured, and currently a first counter, a system frame number and a subframe number satisfy the following formula:

   floor([(first counter $\times$ 10240) + (system frame number $\times$ 10) + subframe number] modulo (non-integer short DRX cycle)) = floor([(time reference system frame number $\times$ 10) + start offset)] modulo (non-integer short DRX cycle)),

   the terminal equipment, for the DRX group, starts an On Duration timer after a slot offset duration from the beginning of a subframe corresponding to the subframe number.

10. The apparatus according to claim 9, wherein,

    the first configuration message includes a time reference system frame number; the terminal equipment initializes the first counter according to the time reference system frame number;
    if the time reference system frame number is 0, the terminal equipment initializes the first counter to 0 when the first configuration message is received; and
    if the time reference system frame number is 512, the terminal equipment initializes the first counter to 0 in a case where a SFN when the first configuration message is received is in a second half part of an SFN cycle, and initializes the first counter to 1 in a case where an SFN when the first configuration message is received is in a first half part of an SFN cycle.

11. The apparatus according to claim 10, wherein,
    the formula is transformed as follows:

    floor([(first counter $\times$ 10240) + (SFN $\times$ 10) + subframe number] modulo (non-integer short DRX cycle)) = floor ((start offset) modulo (non-integer short DRX cycle)).

12. The apparatus according to claim 1, wherein,

    the terminal equipment determines time for starting an On Duration of the non-integer DRX cycle, wherein,
    if a long DRX cycle is used for a certain DRX group, and a non-integer long DRX cycle is configured, and currently a first counter, a system frame number and a subframe number satisfy the following formula:

floor([(first counter × 10240) + (system frame number × 10) + subframe number] modulo (non-integer long DRX cycle)) = floor([(time reference system frame number × 10) + start offset)] modulo (non-integer long DRX cycle)),

the terminal equipment, for the DRX group, starts an On Duration timer after a slot offset duration from the beginning of a subframe corresponding to the subframe number, in a case where Downlink control information with Cyclic redundancy check scrambled by Power-saving radio network temporary identifier (DCP) monitoring is not configured for an active downlink bandwidth part.

**13.** The apparatus according to claim 12, wherein,

the first configuration message includes a time reference system frame number; the terminal equipment initializes the first counter according to the time reference system frame number;
if the time reference system frame number is 0, the terminal equipment initializes the first counter to 0 when the first configuration message is received; and
if the time reference system frame number is 512, the terminal equipment initializes the first counter to 0 in a case where an SFN when the first configuration message is received is in a second half part of an SFN cycle, and initializes the first counter to 1 in a case where an SFN when the first configuration message is received is in a first half part of an SFN cycle.

**14.** The apparatus according to claim 13, wherein,
the formula is transformed as follows:

floor([(first counter × 10240) + (SFN × 10) + subframe number] modulo (non-integer long DRX cycle)) = start offset.

**15.** The apparatus according to claim 12, wherein,
each of the DRX groups shares the following parameters: a non-integer long DRX cycle, a start offset corresponding to the non-integer long DRX cycle, a non-integer short DRX cycle, and a time reference frame number.

**16.** The apparatus according to claim 1, wherein,
a maximum value of the start offset is a value obtained by rounding down a non-integer DRX cycle minus 1.

**17.** The apparatus according to claim 16, wherein,
if an On Duration timer has not run after a length of a DRX cycle from start time of a previous On Duration timer, the terminal equipment starts an On Duration timer.

**18.** An apparatus for configuring a DRX cycle, configured in a network device, wherein the apparatus comprises:

a transmitting unit configured to transmit a second configuration message to a terminal equipment, the second configuration message configuring disable CG retransmission monitoring for a configured grant; and
the second configuration message includes a second information element, the second information element including a sixth field, the sixth field indicating disable CG retransmission monitoring for a configured grant.

**19.** The apparatus according to claim 18, wherein,

the second configuration message is an RRCReconfiguration message; and
the second information element is an IE ConfiguredGrantConfig.

**20.** The apparatus according to claim 18, wherein,
if a serving cell of the terminal equipment is not configured with an uplink HARQ mode, and if the sixth field is not configured for a multi-PUSCH CG to which a configured uplink grant belongs:
if drx-LastTransmissionUL is configured, the terminal equipment starts a drx-HARQ-RT-TimerUL timer for a corresponding HARQ process in the first symbol after the last transmission of corresponding PUSCH transmission;
otherwise, the terminal equipment starts a drx-HARQ-RT-TimerUL timer for a corresponding HARQ process in the first symbol after the first transmission of corresponding PUSCH transmission.

On duration | Opportunity for DRX

UE shall monitor
PDCCH

DRX cycle

## FIG. 1

0ms

t=0ms

On
Duration

DRX cycle = 16ms

16ms

t=16.67ms

32ms

t=33.33ms

48ms

t=50ms

64ms

t=66.67ms

...

## FIG. 2

310

a network device transmits a first configuration message to a terminal equipment, the first configuration message configuring a non-integer DRX cycle represented by one or more fractions; the first configuration message includes a first information element, the first information element including a field indicating a non-integer long DRX cycle and a start offset thereof and/or indicating a non-integer short DRX cycle

## FIG. 3

t=16ms

t=33ms

No on duration

t=66ms

On
duration

17ms — 16ms — 17ms

## FIG. 4

Long DRX cycle = 50/3 ms,
StartOffset = 15ms

15ms 32ms 49ms t

Short DRX cycle = 25/3 ms

6ms 15ms 23ms 31ms 40ms 48ms t

## FIG. 5

610

a terminal equipment receives a first configuration message transmitted by a network device, the first configuration message configuring a non-integer DRX cycle represented by one or more fractions; the first configuration message includes a first information element, the first information element including a field indicating a non-integer long DRX cycle and a start offset thereof and/or indicating a non-integer short DRX cycle

620

a terminal equipment determines time for starting an On Duration of the non-integer DRX cycle

## FIG. 6

710

a network device transmits a second configuration message to a terminal equipment, the second configuration message configuring disable CG retransmission monitoring for a configured grant; the second configuration message includes a second information element, the second information element including a sixth field, the sixth field indicating disable CG retransmission monitoring for a configured grant

## FIG. 7

810

a terminal equipment receives a second configuration message transmitted by a network device, the second configuration message configuring disable CG retransmission monitoring for a configured grant; the second configuration message includes a second information element, the second information element including a sixth field, the sixth field indicating disable CG retransmission monitoring for a configured grant

## FIG. 8

**900**

910

First transmitting unit

920

Second transmitting unit

## FIG. 9

**1000**

1010

transmitting unit

## FIG. 10

**1100**

1110

Receiving unit

1120

Processing unit

1130

Determining unit

## FIG. 11

1200 1210

Receiving unit

1220

Processing unit

FIG. 12

1300

1320 1310 Network device 1340

Memory

Program

Processor

1330

Transceiver

FIG. 13

1400

Terminal
equipment

1410          1430

1440    Input unit                    Communication
                                       module
                                       (transmitter/receiver)

        Memory
          Buffer
1420    Application/fun    Processor    Display           1450
          ction
          Data
          Program                      Power supply       1460

# FIG. 14

## INTERNATIONAL SEARCH REPORT

| International application No. |
| --- |
| **PCT/CN2023/129183** |

| A. | CLASSIFICATION OF SUBJECT MATTER |
| --- | --- |
| | H04W 24/02(2009.01)i |

According to International Patent Classification (IPC) or to both national classification and IPC

| B. | FIELDS SEARCHED |
| --- | --- |

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, WPABS, ENTXT, DWPI, VEN, CNABS, 3GPP: DRX, 周期, 配置, 非整数, 周期, 长DRX, 禁用, CG重传, 监听, 配置授权, 短DRX周期, Configuration, Non-Integer, Cycle, Long DRX, Disable, CG Retransmission, Listen, Configuration Grant, Short DRX Cycle

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115515236 A (APPLE INC.) 23 December 2022 (2022-12-23) description, paragraphs [0029]-[0119], figures 1-15, and claims 1-20 | 1-17 |
| Y | CN 115515236 A (APPLE INC.) 23 December 2022 (2022-12-23) description, paragraphs [0029]-[0119], figures 1-15, and claims 1-20 | 18-20 |
| Y | WO 2022203264 A1 (SAMSUNG ELECTRONICS CO., LTD.) 29 September 2022 (2022-09-29) description, paragraphs [0037]-[0065], and claims 1-14 | 18-20 |
| A | CN 115334696 A (HUAWEI TECHNOLOGIES CO., LTD.) 11 November 2022 (2022-11-11) entire document | 1-20 |
| A | WO 2021088015 A1 (NOKIA SHANGHAI BELL CO., LTD. et al.) 14 May 2021 (2021-05-14) entire document | 1-20 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 May 2024** | **20 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/129183**

| Patent document cited in search report | | | Publication date (day/month/year) | Patent family member(s) | | | Publication date (day/month/year) |
|---|---|---|---|---|---|---|---|
| CN | 115515236 | A | 23 December 2022 | WO | 2022256984 | A1 | 15 December 2022 |
| | | | | US | 2022394618 | A1 | 08 December 2022 |
| | | | | EP | 4102884 | A1 | 14 December 2022 |
| WO | 2022203264 | A1 | 29 September 2022 | CN | 117063588 | A | 14 November 2023 |
| | | | | EP | 4280777 | A1 | 22 November 2023 |
| | | | | KR | 20220131773 | A | 29 September 2022 |
| CN | 115334696 | A | 11 November 2022 | WO | 2022237527 | A1 | 17 November 2022 |
| WO | 2021088015 | A1 | 14 May 2021 | CN | 114556833 | A | 27 May 2022 |

Form PCT/ISA/210 (patent family annex) (July 2022)